# EUROPEAN PATENT SPECIFICATION

(11) **EP 3 849 739 B1**
(45) Date of publication and mention of the grant of the patent: **28.10.2026**
(21) Application number: 19780406.5
(22) Date of filing: 09.09.2019
(51) Int. Cl.: B23K 11/11, B23K 101/34, B23K 103/04, B23K 101/00

(54) **A WELDING METHOD FOR THE MANUFACTURE OF AN ASSEMBLY OF AT LEAST 2 METALLIC SUBSTRATES**
SCHWEISSVERFAHREN ZUR HERSTELLUNG EINER ANORDNUNG AUS MINDESTENS 2 METALLISCHEN SUBSTRATEN
PROCÉDÉ DE SOUDAGE POUR LA FABRICATION D'UN ENSEMBLE D'AU MOINS 2 SUBSTRATS MÉTALLIQUES

(30) Priority: 13.09.2018 WO PCT/IB2018/056998
(43) Date of publication of application: 21.07.2021
(73) Proprietor: ArcelorMittal, 1160 Luxembourg (LU)
(72) Inventor: MACHADO AMORIM, Tiago, 57050 Longeville Les Metz (FR); BROSSARD, Maxime, 57070 Metz (FR); MICHAUT, Stéphanie, 57580 REMILLY (FR); HELMER, Jean-Marie, 57283 Maizières-Lès-Metz (FR)
(74) Representative: Lavoix
(86) International application number: PCT/IB2019/057579
(87) International publication number: WO 2020/053736

(56) References cited:
- EP-A1- 3 085 485
- WO-A1-2011/019430
- WO-A1-2017/017513
- WO-A1-2017/017514
- WO-A1-2017/017521
- DE-A1- 102014 112 028
- US-A1- 2018 250 766
- JEFF SHAO-CHUN HOU ET AL: "Resistance Spot Welding and In-Process Heat Treatment of Hot Stamped Boron Steel", 15 March 2016 (2016-03-15), XP055590969, Retrieved from the Internet <URL:https://uwspace.uwaterloo.ca/bitstream/handle/10012/10321/Hou_Jeffshaochun.pdf?sequence=3&isAllowed=y> [retrieved on 20190522]

## Description

The present invention relates to a method for the manufacture of an assembly of at least two metallic substrates by welding according to the preamble of claim 1 (see for example EP 3 085 485 A1). The invention is particularly well suited for the manufacture of automotive vehicles.

With a view of saving the weight of vehicles, it is known to use high strength steel sheets to achieve lighter weight vehicle bodies and improve crash safety. Hardened parts are also used notably to reduce the weight of vehicles. Indeed, the tensile strength of these steels is of minimum 1200MPa and can be up to 2500MPa. Hardened parts can be coated with an aluminum-based or zinc-based coating having a good corrosion resistance and thermal properties.

Usually, the method for the manufacture of a coated hardened part comprises the following steps:
A) the provision of a steel sheet pre-coated with a metallic coating being conventional coating based on aluminum or zinc,
B) the cutting of the coated steel sheet to obtain a blank,
C) the thermal treatment of the blank at a high temperature to obtain a fully austenitic microstructure in the steel,
D) the transfer of the blank into a press tool,
E) the hot-forming of the blank to obtain a part,
F) the cooling of the part obtained at step E) in order to obtain a microstructure in steel being martensitic or martensito-bainitic or made of at least 75% of equiaxed ferrite, from 5 to 20% of martensite and bainite in amount less than or equal to 10%.

It is generally followed by the welding of two coated hardened parts or one coated hardened part with another metallic substrate. The welding of aluminum or zinc based coated hardened parts is very difficult to realize due to the coating being hard and thick.

The patent application EP3020499 discloses a resistance spot welding method comprising:
- a pulsation process of clamping a sheet assembly of two or more overlapping steel sheets including at least one high-tensile steel sheet using a pair of welding electrodes that are connected to a spot welding power source employing an inverter direct current method, and performing a plurality of repetitions of current passing and current pass stopping, while pressing the steel sheets with the welding electrodes; and
- a continuous current passing process in which, after the pulsation process, current is passed continuously for a longer period of time than a maximum current passing time of the pulsation process, while pressing the steel sheets with the welding electrodes.

However, this method is only dedicated to hot stamped steel sheets coated with conventional zinc-based-coating and aluminum-based coating. Indeed, in Examples, this method was tested on aluminum coated 1500MPa hot stamped steel sheets, galvannealed coated 1500MPa grade hot stamped steel sheet and ZnO skin-treated Al coated 1500MPa grade hot stamped steel sheet. Specific coatings based on aluminum or zinc including other elements are not included in this patent application.

The patent application EP3085485 discloses a resistance spot welding method welding a plurality of steel sheets including a high tensile steel sheet superposed, in which said resistance spot welding method, the conduction system is pulsation conduction using an inverter DC welding power supply, and, in the plurality of current pulses forming the pulsation conduction, at the respective current pulses, the conduction time, the intervals of the current pulses defined as the conduction idle time, and the weld currents applied by the current pulses are variably controlled.

However, this method is dedicated to hot stamped steel sheets comprising on its surface a solid solution of intermetallic compounds and iron by an alloying reaction between a conventional zinc-based (pure Zn, Zn-Fe, Zn-Ni, Zn-Al, Zn-Mg, Zn-Mg-Al, etc.) or a conventional aluminum-based (Al-Si etc.) coating and the steel of the base material. These surfaces are formed with an oxide layer mainly comprised of zinc or aluminum. Further, sometimes the surface of the coating mainly comprised of intermetallic compounds of iron and aluminum is formed with a film mainly comprised of zinc oxide. In Examples, the method was tested on hot stamped steel sheets coated with an alloyed of aluminum coating comprising 9% by weight of Si and Fe and a very small amount of ZnO, and on galvannealed coated hot stamped steel sheets. Usually, the native oxide layer of these coatings has a thickness between 10 and 100nm. When a thin layer of ZnO is deposited on the aluminum based coated hardened part before the austenitization, ZnO and the aluminum-based coating are alloyed. Since a very thin layer of ZnO is deposited on the aluminum-based coating, the oxide native mainly composed of Aluminum is still very thin after austenitization, i.e. 10-100nm, leading to an easy welding. Specific coatings based on aluminum or zinc containing other elements are not included in this patent application.

The patent application GB2468011 discloses a method for applying a current for resistive welding of a plate assembly in which a material of at least one plate is a high-tensile material, the method comprising:
- a first step of applying a first amperage of a magnitude that softens a surface of a joining location of the high-tensile material, continuously for a first predetermined duration;
- a second step of, when the first predetermined duration has passed, switching an energization amount from the first amperage to a second amperage that causes a nugget to grow at the joining location; and
- a third step of applying the second amperage continuously for a second predetermined duration.

This method is dedicated to a high-tensile material or a hot-stamped material. The hot-stamped material can be coated with a plating layer. However, the nature of the plating layer is not specified. Additionally, in the first step, low amperage is applied to soften the surface of a joining location and the second step, high amperage is applied to cause the growth of the nugget at the joining location of the high tensile materials. Nevertheless, the low amperage in the first step is not sufficient for the welding of specific coated hot stamped parts wherein the coatings comprising other elements than zinc or aluminum.

Recently, new coatings have been developed for hot formed steel sheets. The patent application WO2017017521 discloses a phosphatable hardened part coated with an alloyed coating comprising from 0.4 to 20.0% by weight of zinc, from 1.0 to 3.5% by weight of silicon, optionally from 1.0 to 4.0 by weight of magnesium wherein the ratio Zn/Si is between 3.2 and 8.0. The patent application WO2017/017514 discloses a hardened part coated with an alloyed coating comprising from 2.0 to 24.0% by weight of zinc, from 1.1 to 7.0% by weight of silicon and optionally from 1.1 to 8.0% of magnesium, the balance being aluminum wherein the ratio Al/Zn is above 2.9 for improving the liquid metal embrittlement (LME) resistance. The patent application WO2017/017513 discloses a sacrificial steel sheet coated with a coating comprising from 2.0 and 24% by weight of zinc, from 7.1 to 12.0% of silicon, optionally from 1.1 to 8.0% by weight of magnesium, the balance being aluminum wherein the ratio Al/Zn is above 2.9 and the coated sacrificial hardened part obtained after the method of press hardening. These specific coatings have a native oxide layer of a micrometric thickness. Because of the thickness and the hardness of the native oxide layer, these coatings are very difficult to weld.

Nevertheless, none method has been developed to weld these specific coated hardened parts.

Thus, the objective of the present invention is to provide an easy to implement welding method for the manufacture of hardened parts coated with specific coatings based on aluminum or zinc recently developed. In particular for the production lines, the objective is to obtain a welding range for such specific coated hardened parts being equal or above 1kA.

This objective is achieved by providing a method for manufacturing of an assembly by welding according to claim 1. The welding method can also comprise characteristics of claims 2 to 10.

Other characteristics and advantages of the invention will become apparent from the following detailed description of the invention.

To illustrate the invention, various embodiments and trials of non-limiting examples will be described, particularly with reference to the following Figure:
Figure 1 illustrates an embodiment according to the present invention.
Figures 2 to 5 illustrate Examples of spot welding cycle according to the present invention.

Other characteristics and advantages of the invention will become apparent from the following detailed description of the invention.

The designation hardened steel part means a hot-formed or hot-stamped steel sheet having a tensile strength up to 2500 MPa and more preferably up to 2000MPa. For example, the tensile strength is above or equal to 500 MPa, advantageously above or equal to 1200 MPa, preferably above or equal 1500 MPa.

As stated above, a method for manufacturing of an assembly by welding is defined in claim 1.

Without willing to be bound by any theory, it seems that the welding method according to the present invention performed on two metallic substrates comprising at least a hardened steel part coated with the specific coating comprising zinc, silicon, optionally magnesium, the balance being aluminum allows a welding range equal or above 1kA and a decrease of coating splashing on the assembly surface. Indeed, it seems that ZnO and optionally MgOare naturally present on the surface of the hardened steel part due to the oxidation of the hardened steel with air. It is believed that the pulsation breaks at least a part of the ZnO and optionally MgO oxide layer and/or alloyed coating present on the coated hardened steel part opening a path to the welding current. Additionally, it seems that the method according to the present invention comprising one pulsation is easy to implement in industrial scale. Finally, it seems that when the welding force is between 50 and 350daN, the welding is improved since the current is more localized at the electrode center leading to a better expulsion of the alloyed coating and/or oxide layer. However, when the welding force is outside the scope of the present invention, i.e. above 350daN, there is a risk that the nugget is not formed at the interface between the at least two metallic substrates since the current spreads on a larger surface of the coated hardened parts.

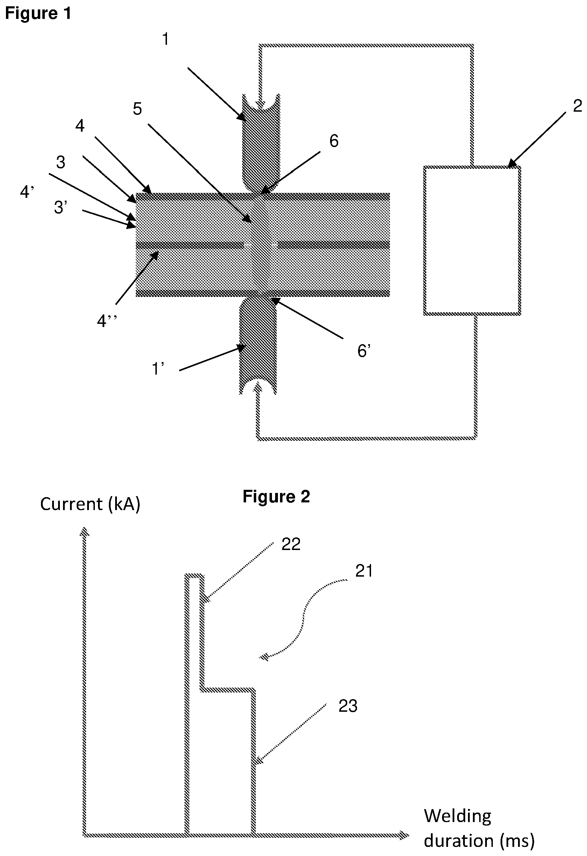

As illustrated in Figure 1, a spot welding machine (not illustrated), comprising welding electrodes 1, 1' and a spot welding source 2, is used. The electrodes join two hardened steel parts 3, 3' coated with the coating according to the invention 4, 4', 4". During the welding, a nugget 5 is formed between the two hardened steel parts through diffusion. The nugget is an alloy of the residual coatings and the steel parts. Thanks to the spot welding cycle according to the present invention, it is believed that at least a part of the coating is removed in the nugget. Moreover, on the top of the spot welded joint 6, 6', it is believed that at least a part of the native oxide layer and/or alloyed coating is not present. Indeed, it seems that the at least one pulsation breaks the native oxide layer and starts the welding between the coated two hardened steel parts by melting and removing the coatings on top of the spot welded joint and in the nugget. Thus, the current can flow through the two hardened steel parts allowing an improvement of the welding. Finally, it is believed that no cooling is needed between the at least one pulsation and the welding step. Indeed, if a cooling is performed between these steps, there is a risk to stop the formation of the nugget between the two hardened steel parts because the steel parts start to solidify. On the contrary when no cooling is performed, it seems that the steel parts stay in liquid form and can easily be joined together.

Preferably, in step B.i), the pulsation current (Cp) is between 0.1 and 30 kA, preferably between 0.1 and 20kA, more preferably between 8.0 and 20kA and advantageously between 8.0 and 15kA.

Advantageously, in step B.i), the pulsation duration is from 5 to 60ms, preferably from 4 to 30ms.

Preferably, in step B.ii), the welding current (Cw) is between 0.1 and 30 kA, preferably between 0.1 and 20kA, more preferably between 0.1 and 10 and advantageously between 1 and 7.5kA.

Advantageously, in step B.ii), the welding duration is from 150 to 500ms and more preferably from 250 to 400ms.

In a preferred embodiment, the current Cp is below the current Cw.

In another preferred embodiment, the current Cp is above the current Cw. Indeed, without willing to be bound by any theory, the inventors have found that when Cp is above Cw, the welding range is further improved.

Preferably, the welding force during the spot welding cycle is between 100 daN and 250 daN, more preferably between 150 and 250 daN.

Preferably, the welding frequency is between 500 and 5000Hz, more preferably 500 and 3000Hz and for example between 800 and 1200Hz.

Preferably, the welding step B.ii) comprises a plurality of pulses, the at least one pulsation B.i being directly followed by the first pulse of the welding step. In this case, there is no cooling between the pulsation and the first pulse. The first pulse is followed by one or more pulse(s), a break duration being present between each subsequent pulse. Preferably, the break duration is from 20 to 80ms and preferably from 30 to 60ms.

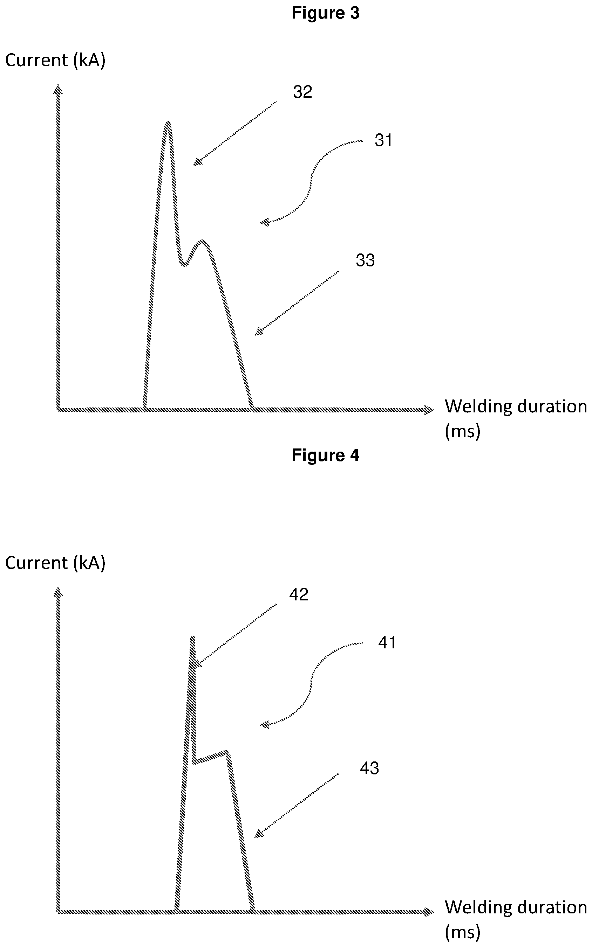

The spot welding cycle according to the present invention can have different shape. Figure 2 illustrates one preferred embodiment wherein the spot welding cycle 21 has a rectangular shape comprising a rectangular pulsation peak 22 and a rectangular welding peak 23. Figure 3 illustrates another preferred embodiment wherein the spot welding cycle 31 has a parabolic shape comprising a parabolic pulsation peak 32 and a parabolic welding peak 33. Figure 4 illustrates another preferred embodiment wherein the spot welding cycle 41 has a triangular shape comprising a triangular pulsation peak 42 and a triangular welding peak 43. According to other embodiments, the spot welding cycle has a parabolic and a rectangular shape comprising a parabolic pulsation peak and a rectangular welding peak or, a triangular and a rectangular shape comprising a triangular pulsation peak and a rectangular welding peak.

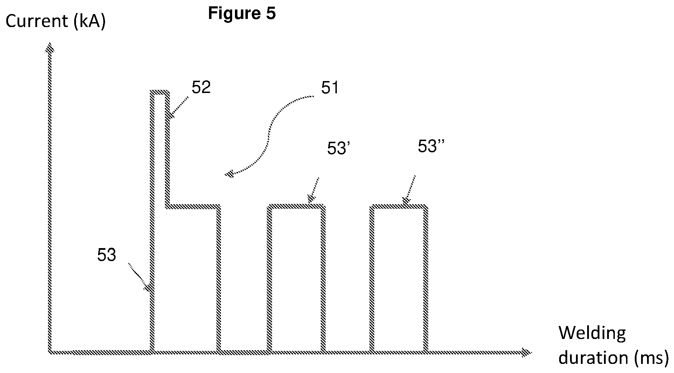

Figure 5 illustrates one preferred embodiment wherein the spot welding cycle comprises one pulsation B.i being directly followed by a first pulse of the welding step. In this Example, the spot welding cycle 51 has a rectangular shape comprising a rectangular pulsation peak 52 and three rectangular welding peaks 53, 53',53".

The invention relates also to an assembly of at least two metallic substrates spot welded together through at least one spot welded joint obtainable with the method according to the present invention, said assembly comprising:
- a first metallic substrate being a hardened steel part coated with:
   ▪ an alloyed coating comprising zinc, silicon, optionally magnesium, the balance being aluminum, directly topped by
   ▪ A native oxide layer comprising ZnO and optionally MgO,
- said spot welded joint comprising a nugget, and said spot welded joint being such that on its top, at least a part of the native oxide layer and/or alloyed coating is not present.

Without willing to be bound by any theory, it seems that when the assembly comprises the above specific coating on the hardened part welded using the welding method according to the present invention, the welding range is equal or above to 1kA. Indeed, it seems that although the thickness of the native oxide layer is higher than the coatings of the prior art, the welding method according to the present invention breaks the native oxide layer and remove at least a part of the native oxide layer and/or alloyed coating allowing a good weldability of the assembly.

Preferably, the alloyed coating of the hardened steel part comprises from 0.1 to 40.0% by weight of zinc, more preferably between 0.1 and 20.0% by weight of zinc and advantageously between 5.0 and 14% by weight of zinc and for example between 7.0 and 12.0% by weight.

Preferably, the alloyed coating of the hardened steel part comprises from 0.1 to 20.0% by weight of silicon, more preferably from 0.1 to 12.0% by weight of silicon and advantageously from 0.1 to 6.0% by weight of silicon and for example between 2.0 and 6.0% by weight of silicon.

Preferably, the alloyed coating of the hardened steel part comprises from 0.1 to 20.0% by weight of magnesium, from 0.1 to 10.0%, preferably from 0.1 to 4.0% by weight of magnesium.

Optionally, the coating comprises additional elements chosen from Sr, Sb, Pb, Ti, Ca, Mn, Sn, La, Ce, Cr, Zr or Bi, the content by weight of each additional element being inferior to 0.3% by weight and optionally residuals elements from feeding ingots or from the passage of the steel substrate in the molten bath including iron. For example, the amount of iron is up to 5% by weight.

In a preferred embodiment, the second metallic substrate is a steel substrate or an aluminum substrate. Preferably, the second steel substrate is a hardened steel part according to the present invention.

In another preferred embodiment, the assembly comprises a third metallic substrate sheet being a steel substrate or an aluminum substrate. In this case, two or several spot welded joints are present.

Finally, the invention relates to the use of the assembly according to the present invention for the manufacture of automotive vehicle.

The invention will now be explained in trials carried out for information only. They are not limiting.

### Examples

### Example 1: Homogeneous welding test

Trials 1 to 18 being Usibor^{®} 1500 steel sheets were hot-dip coated with a coating comprising 3% by weight of silicon, 2% by weight magnesium, 12% by weight of zinc, the balance being aluminum. Trial 19 being Usibor^{®} 1500 steel sheets was hot-dip coated with a coating comprising 3% by weight of silicon, 2% by weight magnesium, 10% by weight of zinc, the balance being aluminum. The steel sheets were then press hardened at an austenitization temperature between 880 and 950°C for 3-7 minutes.

Then, for each Trial, two identical press hardened part were welded together.

The welding range was determined according to the norm SEP1220-2. Welding test started from 3 kA and increased by 0.2 kA every two spot welds. When two consecutive splashings occurred at the same current level, the splash limit was found. When splash limit was reached, welding current decreased with the step of 0.1 kA to have three consecutive welded samples at the same current level without expulsion. This current level is defined as the upper welding limit of the current range: Imax.

After that, the lower limit Imin was found. Imin search was done by using the criteria of 4√t, where t is the sheet thickness. This criterion defines the minimum acceptable diameter value that guaranteed the weld quality and strength. For confirmation five consecutive welded samples were obtained with superior welding diameter than minimal welding diameter.

For Trials 1 to 12 and 17 to 19, the welding cycle comprises, optionally one pulsation having a pulsation current Cp, and one welding step having a welding current Cw defined by Imin and Imax according the norm SEP1220-2. For Trials 13 to 16, the welding cycle comprises one pulsation having a pulsation current Cp and three or four welding steps having a welding current Cw defined by Imin and Imax according the norm SEP1220-2, a temporary stop being performed between each welding step.

The frequency was of 1000Hz. The obtained Imin, Imax and the welding current range are in the following Table 1.

| Trials | Zinc percentage in the coating (wt.%) | Austenitization treatment | | Welding force (daN) | Pulsation | | | Welding step | | | | | |
|---|---|---|---|---|---|---|---|---|---|---|---|---|---|
| | | | | | | | | Number of welding step(s) | duration (ms) | Stop (ms) | Welding current | | Welding current range (kA) |
| | | Temperature (°C) | Time (min) | | Number | Duration (ms) | Current (kA) | | | | Imin (kA) | Imax (kA) | |
| 1* | 12 | 880 | 5 | 200 | 1 | 20 | 10 | 1 | 340 | - | 4.45 | 5.86 | 1.41 |
| 2 | 12 | 880 | 5 | 450 | 1 | 20 | 10 | 1 | 340 | - | 4.45 | 5.08 | 0.63 |
| 3* | 12 | 880 | 8 | 200 | 1 | 20 | 10 | 1 | 340 | - | 4.45 | 5.46 | 1.01 |
| 4 | 12 | 880 | 8 | 450 | 1 | 20 | 10 | 1 | 340 | - | 4.45 | 4.85 | 0.4 |
| 5 | 12 | 900 | 5 | 200 | 0 | - | - | 1 | - | - | - | - | 0 |
| 6 | 12 | 900 | 5 | 450 | 0 | - | - | 1 | - | - | - | - | 0 |
| 7* | 12 | 900 | 5 | 200 | 1 | 20 | 10 | 1 | 340 | - | 4.25 | 5.46 | 1.21 |
| 8* | 12 | 900 | 5 | 300 | 1 | 20 | 10 | 1 | 340 | - | 4.4 | 5.4 | 1 |
| 9 | 12 | 900 | 5 | 450 | 1 | 20 | 10 | 1 | 340 | - | 4.25 | 5.06 | 0.81 |
| 10 | 12 | 900 | 5 | 600 | 1 | 20 | 10 | 1 | 340 | - | 4.6 | 5 | 0.4 |
| 11 | 12 | 900 | 5 | 800 | 1 | 20 | 10 | 1 | - | - | - | - | 0 |
| 12 | 12 | 900 | 5 | 1000 | 1 | 20 | 10 | 1 | - | - | - | - | 0 |
| 13 | 12 | 900 | 5 | 450 | 1 | 80 | 10 | 3 | 160 | 40 | 5.6 | 6.1 | yes |
| 14 | 12 | 900 | 5 | 450 | 1 | 120 | 10 | 3 | 160 | 40 | 4.9 | 5.4 | yes |
| 15 | 12 | 900 | 5 | 450 | 1 | 160 | 10 | 3 | 160 | 40 | 4.5 | 4.6 | yes |
| 16 | 12 | 900 | 5 | 450 | 1 | 160 | 10 | 4 | 160 | 40 | - | - | 0 |
| 17* | 12 | 900 | 7 | 200 | 1 | 20 | 10 | 1 | 340 | - | 4.4 | 5.41 | 1.01 |
| 18 | 12 | 900 | 7 | 450 | 1 | 20 | 10 | 1 | 340 | - | 4.62 | 5.23 | 0.3 |
| 19* | 10 | 900 | 5 | 200 | 1 | 20 | 10 | 1 | 340 | - | 4 | 5.2 | 1.2 |

| | | | | | | | | | | | | | |
|---|---|---|---|---|---|---|---|---|---|---|---|---|---|
| *: according to the present invention | | | | | | | | | | | | | |

Trials 5, 6, 11, 12 and 16 were not weldable, i.e. the criterions of Imin and Imax defined in norm SEP1220-2 were not achieved. Trials according to the present invention have a welding range equal or above 1kA.

### Example 2: Heterogeneous welding test

Usibor^{®} 1500 steel sheets were hot-dip coated with a coating comprising 3% by weight of silicon, 2% by weight magnesium, 12% by weight of zinc, the balance being aluminum. The steel sheets were then press hardened at an austenitization temperature between 900°C for 5 minutes. They were welded with DP600 steel grade (C: 0.14wt.%, Mn: 2.1wt% and Si: 0.4wt.%) coated with a zinc coating. The welding range was determined as in Example 1. The frequency was of 1000Hz. The obtained Imin, Imax and the welding current range are in the following Table 2.

| Trials | Welding force (daN) | Pulsation | | | | Welding step | | | |
|---|---|---|---|---|---|---|---|---|---|
| | | | | | | Welding duration (ms) | Welding current | | Welding current range (kA) |
| | | Number | Duration (ms) | Stop (ms) | Current (kA) | | Imin (kA) | Imax (kA) | |
| 20* | 200 | 1 | 20 | - | 10 | 340 | 4.8 | 6.6 | 1.8 |
| 21* | 300 | 1 | 20 | - | 10 | 340 | 5.2 | 6.4 | 1.2 |
| 22 | 800 | 1 | 20 | - | 10 | - | - | - | 0 |

| | | | | | | | | | |
|---|---|---|---|---|---|---|---|---|---|
| *: according to the present invention | | | | | | | | | |

Trial 22 was not weldable. Trials according to the present invention have a welding range equal or above 1kA.

### Example 3: electrode life test

Electrode life is defined as the last weld number of a test strip before reaching more than two welds out of eight below a minimum weld diameter defined. The minimum weld diameter was of 4.7mm.

Two coated hardened steel parts prepared as Trial 7 were welded together with the welding method according to the present invention comprising one pulsation and the welding step. The pulsation current was of 10kA during 10ms. The welding current was Imax determined for Trial 7 in Example 1. A plurality of spot welds was performed with the electrodes on the two coated hardened parts and the weld diameter was measured for each spot weld. Results are in the following Table 3.

| Trial | Number of spot welds | Weld diameter (mm) |
|---|---|---|
| | 10 | 5.2 |
| | 100 | 5.2 |
| | 200 | 5.2 |
| 7* | 300 | 5.2 |
| | 400 | 5.2 |
| | 500 | 5.3 |
| | 600 | 5.4 |

| | | |
|---|---|---|
| *: according to the present invention | | |

The weld diameter was always above the minimum weld diameter with Trial 7 according to the present invention.

## Claims

1. A method for manufacturing of an assembly by welding, **characterised in that** the method comprises the following steps:
A. The provision of two steel parts (3, 3'), each part (3,3') is a hardened steel part coated with:
• an alloyed coating (4) comprising zinc, silicon, optionally magnesium, the balance being aluminum, directly topped by
• A native oxide layer comprising ZnO and optionally MgO,
B. The application of a spot welding cycle with a spot-welding machine, comprising welding electrodes (1, 1') and a spot welding power source (2) applying an inverter direct current, through the at least two metallic substrates of step A), said spot welding cycle (21, 31, 41, 51) comprising the following sub-steps:
i. one pulsation (22, 32, 42, 52) having a pulsation current (Cp) applied through said at least two metallic substrates joined together using welding electrodes connected to the spot welding power source and directly after,
ii. a welding step (23, 33, 43, 53) having a welding current (Cw) through the at least two metallic substrates and wherein the welding force during the spot welding cycle is between 50 and 350 daN, the pulsation current (Cp) is different from the welding current (Cw) and the pulsation duration is shorter than the welding duration.

2. The method according to claim 1, wherein in step B.i), the pulsation current (Cp) is between 0.1 and 30.0kA.

3. The method according to claim 1 or 2, wherein in step B.i), the pulsation duration is from 5 to 60ms.

4. The method according to anyone of claims 1 to 3, wherein in step B.ii), the welding current (Cw) is between 0.1 and 30kA.

5. The method according to anyone of claims 1 to 4, wherein in step B.ii), the welding duration is from 150 to 500ms.

6. The method according to anyone of claims 1 to 5, wherein the welding force during the spot welding cycle is from 100 daN to 250 daN.

7. The method according to claim 6, wherein the pulsation current (Cp) is below or above the welding current (Cw).

8. The method according to anyone of claims 1 to 7, wherein the welding frequency is from 500 to 5000Hz.

9. The method according to claim 8, wherein the welding step B.ii) comprises a plurality of pulses, the at least one pulsation B.i being directly followed by the first pulse of the welding step.

10. The method according to anyone of claims 1 to 9, wherein the spot welding cycle shape (21, 31, 41, 51) is selected among:
• a rectangular form comprising a rectangular pulsation peak (22) and a rectangular welding peak (23),
• a parabolic form comprising a parabolic pulsation peak (32) and a parabolic welding peak (33),
• a triangular form comprising a triangular pulsation peak (42) and a triangular welding peak (43),
• a parabolic and a rectangular shape comprising a parabolic pulsation peak and a rectangular welding peak and
• a triangular and a rectangular shape comprising a triangular pulsation peak and a rectangular welding peak.

## Patentansprüche

1. Ein Verfahren zur Herstellung einer Anordnung durch Schweißen, **dadurch gekennzeichnet, dass** das Verfahren die folgenden Schritte umfasst:
A. Die Bereitstellung von zwei Stahlteilen (3, 3'), wobei jedes Teil (3, 3') ein gehärtetes Stahlteil ist, das beschichtet ist mit:
• einer legierten Beschichtung (4), umfassend Zink, Silizium, gegebenenfalls Magnesium, wobei der Rest Aluminium ist, direkt bedeckt von
• Einer nativen Oxidschicht, umfassend ZnO und gegebenenfalls MgO,
B. Die Anwendung eines Punktschweißzyklus mit einer Punktschweißmaschine, umfassend Schweißelektroden (1, 1') und eine Punktschweißstromquelle (2), die einen Inverter-Gleichstrom anlegt, durch die mindestens zwei metallischen Substrate von Schritt A), wobei der Punktschweißzyklus (21, 31, 41, 51) die folgenden Unterschritte umfasst:
i. eine Pulsation (22, 32, 42, 52), die einen Pulsationsstrom (Cp) aufweist, der durch die mindestens zwei metallischen Substrate angelegt wird, die unter Verwendung von Schweißelektroden, die mit der Punktschweißstromquelle verbunden sind, zusammengefügt sind, und direkt danach,
ii. einen Schweißschritt (23, 33, 43, 53), der einen Schweißstrom (Cw) durch die mindestens zwei metallischen Substrate aufweist, und wobei die Schweißkraft während des Punktschweißzyklus zwischen 50 und 350 daN liegt, der Pulsationsstrom (Cp) von dem Schweißstrom (Cw) verschieden ist und die Pulsationsdauer kürzer ist als die Schweißdauer.

2. Das Verfahren nach Anspruch 1, wobei in Schritt B.i) der Pulsationsstrom (Cp) zwischen 0,1 und 30,0kA liegt.

3. Das Verfahren nach Anspruch 1 oder 2, wobei in Schritt B.i) die Pulsationsdauer von 5 bis 60ms beträgt.

4. Das Verfahren nach einem beliebigen der Ansprüche 1 bis 3, wobei in Schritt B.ii) der Schweißstrom (Cw) zwischen 0,1 und 30kA liegt.

5. Das Verfahren nach einem beliebigen der Ansprüche 1 bis 4, wobei in Schritt B.ii) die Schweißdauer von 150 bis 500ms beträgt.

6. Das Verfahren nach einem beliebigen der Ansprüche 1 bis 5, wobei die Schweißkraft während des Punktschweißzyklus von 100 daN bis 250 daN beträgt.

7. Das Verfahren nach Anspruch 6, wobei der Pulsationsstrom (Cp) unter oder über dem Schweißstrom (Cw) liegt.

8. Das Verfahren nach einem beliebigen der Ansprüche 1 bis 7, wobei die Schweißfrequenz von 500 bis 5000Hz beträgt.

9. Das Verfahren nach Anspruch 8, wobei der Schweißschritt B.ii) eine Mehrzahl von Pulsen umfasst, wobei der mindestens einen Pulsation B.i direkt der erste Puls des Schweißschritts folgt.

10. Das Verfahren nach einem beliebigen der Ansprüche 1 bis 9, wobei die Form des Punktschweißzyklus (21, 31, 41, 51) ausgewählt ist aus:
• einer rechteckigen Form, umfassend eine rechteckige Pulsationsspitze (22) und eine rechteckige Schweißspitze (23),
• einer parabolischen Form, umfassend eine parabolische Pulsationsspitze (32) und eine parabolische Schweißspitze (33),
• einer dreieckigen Form, umfassend eine dreieckige Pulsationsspitze (42) und eine dreieckige Schweißspitze (43),
• einer parabolischen und einer rechteckigen Form, umfassend eine parabolische Pulsationsspitze und eine rechteckige Schweißspitze, und
• einer dreieckigen und einer rechteckigen Form, umfassend eine dreieckige Pulsationsspitze und eine rechteckige Schweißspitze.

## Revendications

1. Un procédé de fabrication d'un assemblage par soudage, **caractérisé en ce que** le procédé comprend les étapes suivantes :
A. La fourniture de deux pièces en acier (3, 3'), chaque pièce (3, 3') est une pièce en acier trempé revêtue de :
• un revêtement allié (4) comprenant du zinc, du silicium, éventuellement du magnésium, le solde étant de l'aluminium, directement surmonté par
• Une couche d'oxyde natif comprenant du ZnO et éventuellement du MgO,
B. L'application d'un cycle de soudage par points avec une machine de soudage par points, comprenant des électrodes de soudage (1, 1') et une source d'alimentation de soudage par points (2) appliquant un courant continu à onduleur, à travers les au moins deux substrats métalliques de l'étape A), ledit cycle de soudage par points (21, 31, 41, 51) comprenant les sous-étapes suivantes :
i. une impulsion (22, 32, 42, 52) ayant un courant d'impulsion (Cp) appliqué à travers lesdits au moins deux substrats métalliques assemblés ensemble à l'aide d'électrodes de soudage connectées à la source d'alimentation de soudage par points et directement après,
ii. une étape de soudage (23, 33, 43, 53) ayant un courant de soudage (Cw) à travers les au moins deux substrats métalliques et dans lequel la force de soudage pendant le cycle de soudage par points est comprise entre 50 et 350 daN, le courant d'impulsion (Cp) est différent du courant de soudage (Cw) et la durée d'impulsion est plus courte que la durée de soudage.

2. Le procédé selon la revendication 1, dans lequel à l'étape B.i), le courant d'impulsion (Cp) est compris entre 0,1 et 30,0kA.

3. Le procédé selon la revendication 1 ou 2, dans lequel à l'étape B.i), la durée d'impulsion est de 5 à 60ms.

4. Le procédé selon l'une quelconque des revendications 1 à 3, dans lequel à l'étape B.ii), le courant de soudage (Cw) est compris entre 0,1 et 30kA.

5. Le procédé selon l'une quelconque des revendications 1 à 4, dans lequel à l'étape B.ii), la durée de soudage est de 150 à 500ms.

6. Le procédé selon l'une quelconque des revendications 1 à 5, dans lequel la force de soudage pendant le cycle de soudage par points est de 100 daN à 250 daN.

7. Le procédé selon la revendication 6, dans lequel le courant d'impulsion (Cp) est inférieur ou supérieur au courant de soudage (Cw).

8. Le procédé selon l'une quelconque des revendications 1 à 7, dans lequel la fréquence de soudage est de 500 à 5000Hz.

9. Le procédé selon la revendication 8, dans lequel l'étape de soudage B.ii) comprend une pluralité d'impulsions, l'au moins une impulsion B.i étant directement suivie par la première impulsion de l'étape de soudage.

10. Le procédé selon l'une quelconque des revendications 1 à 9, dans lequel la forme du cycle de soudage par points (21, 31, 41, 51) est choisie parmi :
• une forme rectangulaire comprenant un pic d'impulsion rectangulaire (22) et un pic de soudage rectangulaire (23),
• une forme parabolique comprenant un pic d'impulsion parabolique (32) et un pic de soudage parabolique (33),
• une forme triangulaire comprenant un pic d'impulsion triangulaire (42) et un pic de soudage triangulaire (43),
• une forme parabolique et rectangulaire comprenant un pic d'impulsion parabolique et un pic de soudage rectangulaire et
• une forme triangulaire et rectangulaire comprenant un pic d'impulsion triangulaire et un pic de soudage rectangulaire.
